# EUROPEAN PATENT APPLICATION

(11) **EP 4 851 206 A1**
(43) Date of publication of application: **09.12.2026**
(21) Application number: 24943563.7
(22) Date of filing: 09.09.2024
(51) Int. Cl.: C08G 18/32, C08G 18/66, C08K 7/26, C08K 3/36, F25D 23/06

(54) **REFRIGERATOR**

(30) Priority: 11.06.2024 JP 2024094443
(71) Applicant: Samsung Electronics Co., Ltd., Suwon-si, Gyeonggi-do 16677 (KR)
(72) Inventor: HIRANO, Toshiaki, Yokohama-shi, Kanagawa 230--0027 (JP); MORI, Aiko, Yokohama-shi, Kanagawa 230--0027 (JP); TAKEUCHI, Kenji, Yokohama-shi, Kanagawa 230--0027 (JP)
(74) Representative: Walaski, Jan Filip
(86) International application number: PCT/KR2024/013573
(87) International publication number: WO 2025/258748

(57) **Abstract**

A refrigerator is provided in which the thermal conductivity of rigid polyurethane foam is reduced compared to conventional ones. The refrigerator comprises: a main body including an inner case that forms a storage chamber, an outer case that is outside the inner case, and an insulating material between the inner case and the outer case; and a door configured to open and close the storage chamber. The insulating material includes rigid polyurethane foam, and the rigid polyurethane foam contains a polyol-derived first structural unit, an isocyanate-derived second structural unit, and contains fine particles having lower thermal conductivity than a polyurethane resin including the first structural unit and the second structural unit, and a third structural unit having a higher degree of freedom, in a three-dimensional structural manner, than the first structural unit and the second structural unit.

## Description

### Technical Field

The present disclosure relates to a refrigerator including a rigid polyurethane foam usable as an insulating material for a home appliance such as a refrigerator.

### Background Art

In order to reduce the thermal conductivity of a rigid polyurethane foam used in a refrigerator, as in Patent Document 1, the polyurethane foam contains porous fine particles such as aerogel or Aerosil.

### [Prior Art Documents]

### [Patent Document]

Patent Document 1: Japanese Translation of PCT International Application Publication No. 2014-502305

### Disclosure of Invention

### Technical Problem

However, as a result of actual testing, the present inventors found that the thermal conductivity of the rigid polyurethane foam used in a refrigerator could not be sufficiently reduced merely by incorporating fine particles into the foam as described in the aforementioned patent document.

The present disclosure has been made in view of such a problem, and a main object thereof is to provide a refrigerator including a polyurethane foam having thermal conductivity further reduced relative to conventional polyurethane foams.

### Solution to Problem

That is, the refrigerator according to the present disclosure is as follows.

According to an embodiment, there is provided a refrigerator including: a main body including an inner cabinet forming a storage compartment, an outer cabinet on an outer side of the inner cabinet, and an insulating material between the inner cabinet and the outer cabinet; and a door configured to open and close the storage compartment, wherein the insulating material includes a rigid polyurethane foam, the rigid polyurethane foam contains a first constituent unit derived from a polyol and a second constituent unit derived from an isocyanate, and the rigid polyurethane foam contains fine particles having a thermal conductivity lower than that of a polyurethane resin including the first constituent unit and the second constituent unit, and a third constituent unit having a higher degree of freedom in stereostructure than the first constituent unit and the second constituent unit.

According to another embodiment, there is provided a refrigerator, wherein the third constituent unit may be a constituent unit derived from polyol and/or a constituent unit derived from a surfactant.

According to another embodiment, there is provided a refrigerator, wherein the constituent unit derived from polyol may include a constituent unit derived from polyethylene glycol, a constituent unit derived from polypropylene glycol, or a combination thereof.

According to another embodiment, there is provided a refrigerator, wherein the constituent unit derived from the surfactant may include a constituent unit derived from a silicone-based surfactant, a constituent unit derived from a fluorine-based surfactant, a constituent unit derived from a nonionic surfactant, or a combination thereof.

According to another embodiment, there is provided a refrigerator, wherein the third constituent unit may include a linear structure.

According to another embodiment, there is provided a refrigerator, wherein a molecular weight of the third constituent unit may be 50 Dalton to 500 Dalton.

According to another embodiment, there is provided a refrigerator, wherein a content of the third constituent unit may be 0.5 mass% to 5 mass% with respect to 100 mass% of the rigid polyurethane foam.

According to another embodiment, there is provided a refrigerator, wherein the fine particles are chemically bonded to the urethane resin.

According to another embodiment, there is provided a refrigerator, wherein a content of the fine particles is 0.01 vol% to 0.5 vol% with respect to 100 vol% of the rigid polyurethane foam.

According to another embodiment, there is provided a refrigerator, wherein a content of the fine particles is 0.1 mass% to 1.5 mass% with respect to 100 mass% of the rigid polyurethane foam.

According to another embodiment, there is provided a refrigerator, wherein a surface of the fine particles is modified by a compound containing a hydrophilic group and a hydrophobic group, the hydrophilic group is an amino group or a hydroxyl group, and the hydrophobic group is a linear alkyl group having 1 to 10 carbon atoms.

According to another embodiment, there is provided a refrigerator, wherein the fine particles are hollow particles or porous particles.

According to another embodiment, there is provided a refrigerator, wherein the fine particles comprise a core, a shell disposed on the core, and a surface layer disposed on the shell, a density of the core is lower than a density of the shell, and the surface layer includes a hydrophilic group, a hydrophobic group, or a combination thereof.

According to another embodiment, there is provided a refrigerator, wherein an average particle diameter of the fine particles is 0.03 µm to 20 µm.

According to another embodiment, there is provided a refrigerator, wherein an apparent density of the fine particles is 200 kg/m³ or less.

According to another embodiment, there is provided a refrigerator, wherein the first constituent unit contains, in a range of 1 mass% to 10 mass%, a constituent unit derived from an aliphatic non-aromatic non-amine compound having 2 to 4 functional groups and having ethylene oxide added thereto, and contains, in a range of 65 mass% to 99 mass%, a constituent unit derived from a non-aromatic non-amine compound having 4 to 6 functional groups and having both ethylene oxide and propylene oxide added thereto.

According to another embodiment, there is provided a refrigerator, wherein the first constituent unit contains a constituent unit derived from a compound obtained by adding a diol to an aromatic dicarboxylic acid having 2 to 4 functional groups in a range of 1 mass% to 10 mass%.

According to another embodiment, there is provided a refrigerator, wherein a thermal conductivity of the fine particles is 50 mW/m·K or less.

According to another embodiment, there is provided a refrigerator, wherein the second constituent unit includes a constituent unit derived from an aromatic isocyanate compound having 2 to 4 isocyanate groups.

According to another embodiment, there is provided a refrigerator, further including a cold air supply device that supplies cold air to the storage compartment, and further including a machine room in which components belonging to the cold air supply device are disposed and a processor that controls the refrigerator.

### Advantageous Effects of Invention

According to the present disclosure, since the rigid polyurethane foam used in a refrigerator contains fine particles having a lower thermal conductivity than a urethane resin and a third constituent unit having a higher degree of freedom in stereostructure than the first constituent unit and the second constituent unit constituting the urethane resin, it is possible to provide a refrigerator in which the thermal conductivity of the rigid polyurethane foam is further reduced compared with conventional rigid polyurethane foams.

### Brief Description of Drawings

FIG. 1 is a perspective view of a refrigerator according to an embodiment of the present disclosure.
FIG. 2 is a front view showing the interior of a refrigerator according to an embodiment of the present disclosure.
FIG. 3 is a schematic diagram showing suppression of cell growth in a rigid polyurethane foam used in a refrigerator according to an embodiment of the present disclosure.
FIG. 4 is a schematic diagram showing structures of a rigid polyurethane foam used in a refrigerator according to an embodiment of the present disclosure and a conventional rigid polyurethane foam.

### Best Mode for Carrying out the Invention

The various embodiments of the present disclosure and the terms used therein are not intended to limit the technical features described in the present disclosure to specific embodiments, and should be understood to include various modifications, equivalents, or substitutes of the embodiments.

In connection with the description of the drawings, similar reference numerals may be used for similar or related components.

The singular form of a noun corresponding to an item may include one or a plurality of the items unless the relevant context clearly indicates otherwise.

In the present disclosure, each of the phrases such as "A or B", "at least one of A and B", "at least one of A or B", "A, B or C", "at least one of A, B and C", and "at least one of A, B, or C" may include any one of the items listed together in the corresponding one of the phrases, or all possible combinations thereof.

The term "and/or" includes a combination of a plurality of related described components or any one of a plurality of related described components.

Terms such as "first", "second", or "1st" or "2nd" may be used simply to distinguish a corresponding component from another corresponding component, and do not limit the corresponding components in other aspects (e.g., importance or order).

In addition, terms such as 'front surface' , 'rear surface', 'top surface', 'bottom surface', 'side surface', 'left', 'right', 'upper', and 'lower' used in the present disclosure are defined based on the drawings, and the shape and position of each component are not limited by these terms.

Terms such as "comprise" or "include" are intended to designate the presence of features, numbers, steps, operations, components, parts, or combinations thereof described in the present disclosure, and do not preclude in advance the presence or possibility of adding one or more other features, numbers, steps, operations, components, parts, or combinations thereof.

When a certain component is referred to as being "connected", "coupled", "supported", or "in contact" with another component, this includes not only cases where the components are directly connected, coupled, supported, or in contact, but also cases where they are indirectly connected, coupled, supported, or in contact through a third component.

When a certain component is referred to as being located "on" another component, this includes not only cases where a certain component is in contact with another component, but also cases where still another component exists between the two components.

In the present disclosure, the "size" of a particle refers to the "particle diameter" of the particle unless defined otherwise.

In the present disclosure, the "particle diameter" of a particle refers to an average diameter when the particle is spherical, and refers to an average major axis length when the particle is non-spherical. The particle diameter of a particle may be measured using a particle size analyzer (PSA). The "particle diameter" of a particle is, for example, an "average particle diameter". The "average particle diameter" is the median particle diameter (D50) unless explicitly described otherwise. The median particle diameter (D50) is a particle size corresponding to a cumulative value of 50 % as calculated from the smallest-particle-size side of a cumulative particle size distribution curve in which particles are accumulated in order from the smallest particle to the largest particle. The cumulative value may be, for example, a cumulative volume. The median particle diameter (D50) may be measured, for example, by a laser diffraction method. Alternatively, the "average particle diameter" may be measured by software or manually from a scanning electron microscope (SEM) image or a transmission electron microscope (TEM) image.

In the present disclosure, a "hydrophilic group" is a functional group that is attracted to water and has a tendency to dissolve in water. The hydrophilic group includes, for example, a hydroxyl group, a carboxyl group, an amino group, and the like.

In the present disclosure, a "hydrophobic group" is a functional group that is not attracted to water and has a tendency not to dissolve in water. The hydrophobic group includes, for example, an alkyl group, an aryl group, and the like.

In the present disclosure, a "refrigerator" is a home appliance that supplies cold air generated by a compressor of a cold air supply device to a storage compartment, thereby keeping various foods fresh for a long period of time.

The refrigerator includes, for example, a main body, and the main body may include an inner cabinet, an outer cabinet disposed on an outer side of the inner cabinet, and an insulating material provided between the inner cabinet and the outer cabinet.

In the present disclosure, an "inner cabinet" is a member forming a storage compartment. The inner cabinet may include, for example, a case, a plate, a panel, or a liner. The inner cabinet may be formed as, for example, a single body or may be formed by assembling a plurality of plates.

In the present disclosure, an "outer cabinet" is a member forming an exterior of the main body. The outer cabinet may be coupled to an outer side of the inner cabinet such that an insulating material is disposed between the inner cabinet and the outer cabinet.

In the present disclosure, an "insulating material" is a material that blocks or suppresses transfer of heat. The insulating material may thermally insulate, for example, the inside of the storage compartment from the outside of the storage compartment such that a temperature inside the storage compartment can be maintained at a set appropriate temperature without being affected by an external environment of the storage compartment. The insulating material may include, for example, a foamed insulating material. For example, after fixing the inner cabinet and the outer cabinet with a jig or the like, the foamed insulating material may be disposed by injecting and foaming, between the inner cabinet and the outer cabinet, a urethane foam in which a urethane resin and a foaming agent are mixed.

The insulating material may further include, for example, a vacuum insulating material in addition to the foamed insulating material. The insulating material may include, for example, only a vacuum insulating material instead of the foamed insulating material. The vacuum insulating material may include, for example, a core material and an outer covering material that accommodates the core material and seals an inside thereof at a vacuum or near-vacuum pressure. The vacuum insulating material may further include, for example, an adsorbent that adsorbs gas and moisture to stably maintain a vacuum state. The insulating material is not limited to the aforementioned foamed insulating material and/or vacuum insulating material, and any material that is used as an insulating material in the relevant technical field may be used.

In the present disclosure, a "storage compartment" is a space in which articles are stored in a refrigerator. The storage compartment may include, for example, a space defined by an inner cabinet. The storage compartment may further include, for example, an inner cabinet that defines a space corresponding to the storage compartment. Various articles such as, for example, food, medicine, and cosmetics may be stored in the storage compartment, and the storage compartment may be formed such that at least one side thereof is open in order to put in and take out the articles.

The refrigerator may include, for example, one or more storage compartments. When two or more storage compartments are formed in the refrigerator, each of the storage compartments may have a different use and may be maintained at a different temperature. To this end, the storage compartments may be partitioned from one another by a partition wall including an insulating material.

The storage compartment may be provided to be maintained, for example, in an appropriate temperature range according to a use thereof, and may include a "refrigerating compartment," a "freezing compartment," and/or a "variable temperature compartment" that are distinguished according to the use thereof and/or the temperature range thereof. The refrigerating compartment may be maintained, for example, at a temperature suitable for refrigerating and storing an article. The freezing compartment may be maintained, for example, at a temperature suitable for freezing and storing an article.

In the present disclosure, "refrigeration" refers to cooling an article to be cold within a limit at which the article does not freeze. For example, the refrigerating compartment may be maintained in a range of 0 degrees Celsius to plus 7 degrees Celsius.

In the present disclosure, "freezing" refers to cooling an article to freeze the article or to maintain the article in a frozen state. For example, the freezing compartment may be maintained in a range of minus 20 degrees Celsius to minus 1 degree Celsius.

The variable temperature compartment may be used as either the refrigerating compartment or the freezing compartment according to a selection of a user or regardless of the selection of the user.

The storage compartment may be referred to by various names such as a "vegetable compartment," a "fresh compartment," a "cooling compartment," and an "ice-making compartment," in addition to names such as a "refrigerating compartment," a "freezing compartment," and a "variable temperature compartment." The terms "refrigerating compartment," "freezing compartment," and "variable temperature compartment" used below should be understood as encompassing a storage compartment having a corresponding use and temperature range, respectively.

The refrigerator may include at least one door configured to open and close an open side of the storage compartment.

In the present disclosure, the "door" is a member provided to open and close each of one or more storage compartments, or a member provided such that one door is provided to open and close a plurality of storage compartments. The door may be rotatably or slidably installed on a front surface of the main body.

The door may be configured to seal the storage compartment, for example, when the door is closed. The door may include an insulating material, like the main body, so as to insulate the storage compartment, for example, when the door is closed.

The door may include, for example, a door outer plate forming a front surface of the door, a door inner plate forming a rear surface of the door and facing the storage compartment, an upper cap, a lower cap, and a door insulating material provided inside the door outer plate, the door inner plate, the upper cap, and the lower cap.

A gasket that seals the storage compartment by being in close contact with the front surface of the main body when the door is closed may be provided, for example, on an edge of the door inner plate. The door inner plate may include, for example, a dyke protruding rearward so that a door basket capable of storing an article can be mounted.

The door may include, for example, a door body and a front panel detachably coupled to a front side of the door body and forming a front surface of the door. The door body may include, for example, a door outer plate forming a front surface of the door body, a door inner plate forming a rear surface of the door body and facing the storage compartment, an upper cap, a lower cap, and a door insulating material provided inside the door outer plate, the door inner plate, the upper cap, and the lower cap.

The refrigerator may be classified into, for example, a French door type, a side-by-side type, a bottom mounted freezer (BMF), a top mounted freezer (TMF), or a one-door refrigerator, according to the arrangement of the door and the storage compartment.

The refrigerator may include a cold air supply device provided to supply cold air to the storage compartment.

In the present disclosure, the "cold air supply device" means a machine, a mechanism, an electronic device, and/or a system combining the machine, the mechanism, and the electronic device, each being capable of generating cold air and guiding the cold air to cool the storage compartment.

The cold air supply device may generate cold air through a refrigeration cycle including a compression process, a condensation process, an expansion process, and an evaporation process of a refrigerant. To this end, the cold air supply device may include a compressor, a condenser, an expansion device, and an evaporator capable of driving the refrigeration cycle.

The refrigerator may include a machine room provided such that at least some components belonging to the cold air supply device are disposed therein.

In the present disclosure, the "machine room" means a space in which at least some components belonging to the cold air supply device or the like are disposed. The machine room may be provided to be partitioned and insulated from the storage compartment in order to prevent heat generated from the components disposed in the machine room from being transferred to the storage compartment. An inside of the machine room may be configured to communicate with an outside of the main body so as to dissipate heat from the components disposed inside the machine room.

The refrigerator may further include a dispenser provided at the door to provide water and/or ice. The dispenser may be provided at the door such that a user is able to access the dispenser without opening the door.

The refrigerator may include an ice making device provided to generate ice. The ice making device may include an ice making tray to store water, an ice separating device to separate ice from the ice making tray, and an ice bucket to store ice generated in the ice making tray.

The refrigerator may include a processor to control the refrigerator.

In the present disclosure, a "processor" controls an overall operation of the refrigerator. The processor refers to a hardware element (chip) including an integrated circuit in which an electrical circuit is integrated. The processor may execute a program stored in a memory to control components of the refrigerator. The processor may include a separate neural processing unit (NPU) that performs an operation of an artificial intelligence model. In addition, the processor may include a central processing unit, a graphic processing unit (GPU), and the like. The processor may generate a control signal for controlling an operation of the cold air supply device. For example, the processor may receive temperature information of the storage compartment from a temperature sensor and generate, based on the temperature information of the storage compartment, a cooling control signal for controlling an operation of the cold air supply device.

In addition, the processor may process a user input of a user interface and control an operation of the user interface according to a program and/or data stored/recorded in a memory. The user interface may be provided using an input interface and an output interface. The processor may receive a user input from the user interface. In addition, the processor may transmit, to the user interface, a display control signal and image data for displaying an image on the user interface in response to the user input.

In the present disclosure, a "memory" stores or records various information, data, instructions, programs, and the like necessary for an operation of a refrigerator. The memory refers to a hardware element (chip) including an integrated circuit in which an electrical circuit is integrated. The memory may store temporary data generated while generating a control signal for controlling components included in the refrigerator. The memory may include at least one of a volatile memory or a nonvolatile memory, or a combination thereof. The processor and the memory may be provided integrally or separately. The processor may include one or more processors. For example, the processor may include a main processor and at least one sub-processor. The memory may include one or more memories.

The refrigerator may include, for example, a processor and a memory that control all of the components included in the refrigerator, and may include a plurality of processors and a plurality of memories that individually control the components of the refrigerator. For example, the refrigerator may include a processor and a memory that control an operation of a cold air supply device according to an output of a temperature sensor. The refrigerator may separately include a processor and a memory that control an operation of a user interface according to a user input.

In the present disclosure, a "controller" refers to a part including a memory that records or stores a program and/or data for controlling the refrigerator, and a processor that outputs a control signal for controlling the cold air supply device and the like according to the program and/or data stored in the memory.

The communication module may communicate with an external device such as a server, a mobile device, and another home appliance through a nearby access point (AP). The access point (AP) may connect a local area network (LAN) to which the refrigerator or a user device is connected to a wide area network (WAN) to which the server is connected. The refrigerator or the user device may be connected to the server through the wide area network (WAN).

The input interface may include a key, a touch screen, a microphone, and the like. The input interface may receive a user input and transmit the user input to the processor.

The output interface may include a display, a speaker, and the like. The output interface may output various notifications, messages, information, and the like generated by the processor.

Hereinafter, an embodiment of the present disclosure will be described in detail with reference to the drawings.

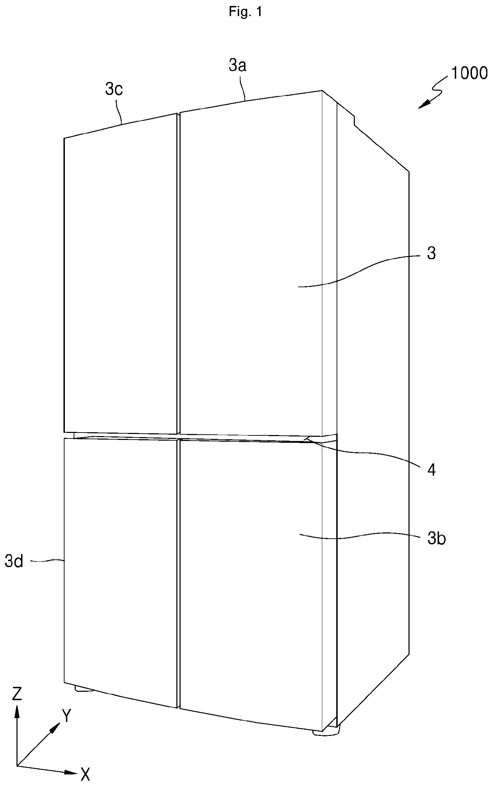

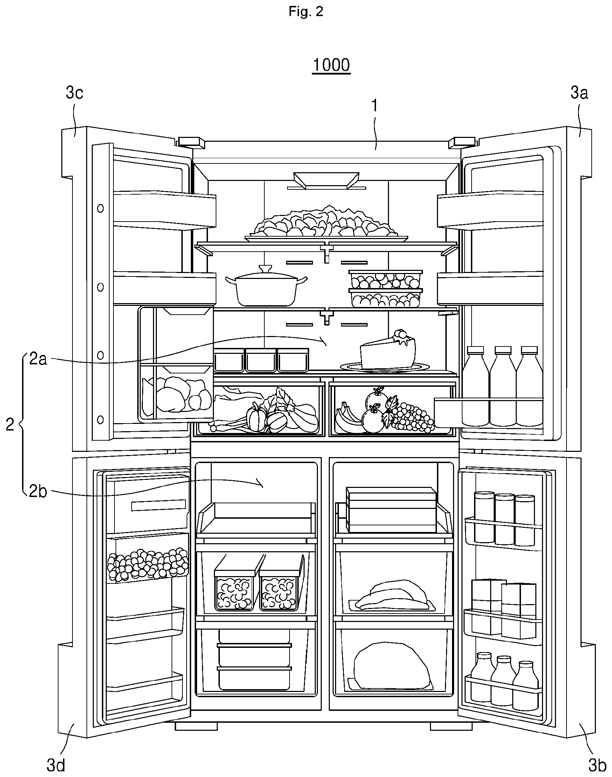

FIG. 1 is a perspective view of a refrigerator according to an embodiment of the present disclosure. FIG. 2 is a front view illustrating an interior of a refrigerator according to an embodiment of the present disclosure.

Referring to FIGS. 1 and 2, a refrigerator 1000 according to an embodiment of the present disclosure includes a main body 1 having storage compartments 2, 2a, and 2b, and doors 3, 3a, 3b, 3c, and 3d coupled to the main body 1 to open and close the storage compartments.

The main body 1 of the refrigerator 1000 may include an inner cabinet, an outer cabinet disposed outside the inner cabinet, and an insulating material disposed between the inner cabinet and the outer cabinet. Since the main body 1 includes the heat insulating material, a temperature inside the storage compartment 2 may be maintained at a set appropriate temperature without being affected by an external environment of the storage compartment. The refrigerator 1000 includes doors 3, 3a, 3b, 3c, and 3d configured to open and close an open side of the storage compartment 2. Although four doors 3 are illustrated in the refrigerator 1000, the number of the doors 3 is not limited thereto, and an upper door 3a and a lower door 3b on a right side of the refrigerator 1000 may be configured as one door, and an upper door 3c and a lower door 3d on a left side of the refrigerator 1000 may be configured as one door. In addition, the number of doors of the refrigerator 1000 may be more or fewer than four. In addition, positions of the doors 3 may be changed in various ways. A handle region 4, which is a clearance into which a user may insert a hand to open and close the doors 3, may be provided between the plurality of doors 3a, 3b, 3c, and 3d. The doors 3 may be configured to seal the storage compartment when the doors 3 are closed. The doors 3 may include an insulating material, like the main body 1, to insulate the storage compartment 2 when the doors 3 are closed.

The insulating material includes a rigid polyurethane foam. The rigid polyurethane foam contains a first constituent unit derived from a polyol and a second constituent unit derived from an isocyanate, and contains fine particles having a thermal conductivity lower than that of a polyurethane resin including the first constituent unit and the second constituent unit, and a third constituent unit having a higher degree of freedom in stereostructure than the first constituent unit and the second constituent unit.

Since the fine particles having a thermal conductivity lower than that of the polyurethane resin are included, a thermal conductivity of the rigid polyurethane foam may be lowered. As a result, an insulating effect of a refrigerator having the insulating material including the rigid polyurethane foam may be further improved. For example, a space of a storage compartment may be increased by reducing a thickness of the insulating material. In addition, the fine particles may be disposed inside a skeleton including the urethane resin through a chemical bond with the urethane resin. Accordingly, in the rigid polyurethane foam, heat conduction through the skeleton including the urethane resin may be more effectively blocked or suppressed. As a result, an insulating effect of a refrigerator having the insulating material including the rigid polyurethane foam may be further improved. For example, a weight of the insulating material may be further reduced by reducing a content of the fine particles used in the rigid polyurethane foam.

Since the third constituent unit having a relatively high degree of freedom in stereostructure is bonded to the first constituent unit or the second constituent unit having a relatively low degree of freedom in stereostructure and having a rigid structure by a covalent bond to form the polyurethane resin, an overall degree of freedom in stereostructure of the polyurethane resin may be increased. By using, as the third constituent unit, one having a structure with less steric hindrance, a thermal conductivity of the urethane resin may be lowered. In addition, despite including the fine particles, foaming expandability of the rigid polyurethane foam may be improved. That is, despite including the fine particles, a decrease in a foam expansion ratio of the rigid polyurethane foam may be suppressed, and thus an overall thermal conductivity of the rigid polyurethane foam may be lowered. In addition, by foaming and curing the rigid polyurethane foam having such excellent foaming expandability while injecting the same into an elongated space, the elongated space may be easily filled with the rigid polyurethane foam. As a result, an insulating effect of a refrigerator including an insulating material containing the rigid polyurethane foam may be further improved. For example, by easily filling an elongated space with the rigid polyurethane foam, a refrigerator including a storage compartment having a complicated structure may be easily provided.

### <Configuration of rigid polyurethane foam according to present embodiment>

The rigid polyurethane foam according to the present embodiment is one in which a plurality of cells are formed inside by foaming and curing. This foaming and curing may be performed by reacting a polyol serving as a raw material of a first constituent unit contained in the rigid polyurethane foam with an isocyanate serving as a raw material of a second constituent unit to produce a polyurethane resin containing the first constituent unit derived from the polyol and the second constituent unit derived from the isocyanate, and causing foaming by a foaming agent.

In the rigid polyurethane foam according to the present embodiment, an overall density of the rigid polyurethane foam may be, for example, 30 kg/m³ to 45 kg/m³, 32 kg/m³ to 40 kg/m³, or 32 kg/m³ to 38 kg/m³.

In addition, the rigid polyurethane foam refers to a urethane foam that has lost resilience and cushioning properties after curing, and is often used for thermal insulation purposes.

The first constituent unit is a chemical structural unit after the polyol serving as a material thereof is introduced into the polyurethane resin. Examples of the polyol serving as a material of the first constituent unit include a polyether polyol and/or a polyester polyol.

The polyol serving as a material of the first constituent unit may contain a constituent unit derived from an aromatic amine compound having 4 to 6 functional groups and having both ethylene oxide and propylene oxide added thereto. Specific examples of the constituent unit derived from an aromatic amine compound include 2,3-toluenediamine, 2,4-toluenediamine, and 2,6-toluenediamine. A content of the constituent unit derived from an aromatic amine compound may be in a range of 65 mass% to 99 mass%, 65 mass% to 90 mass%, 65 mass% to 80 mass%, or 65 mass% to 75 mass% when a total of the polyol serving as a material of the first constituent unit is regarded as 100 mass%.

The polyol serving as a material of the first constituent unit may contain a constituent unit derived from an aliphatic non-amine compound having 2 to 4 functional groups and having ethylene oxide added thereto. Specific examples of the constituent unit derived from an aliphatic non-amine compound include ethylene glycol, propylene glycol, glycerin, and pentaerythritol. A content of the constituent unit derived from an aliphatic non-amine compound in this case may be in a range of 1 mass% to 10 mass% when the total amount of the polyol serving as a material of the first constituent unit is 100 mass%. Alternatively, a content of the constituent unit derived from an aliphatic non-amine compound may be in a range of 1 mass% to 35 mass%, 10 mass% to 35 mass%, 20 mass% to 35 mass%, or 25 mass% to 35 mass% when the total amount of the polyol serving as a material of the first constituent unit is 100 mass%. When the polyol serving as a material of the first constituent unit contains the aliphatic non-amine compound in the above-described range, steric hindrance due to an aromatic ring may be suppressed, and the strength of a cell wall may be improved. As a result, it is thought that the cells may be further miniaturized and a high gas barrier property may be imparted, so that the thermal conductivity of the rigid polyurethane foam may be further reduced.

The polyol serving as a material of the first constituent unit may contain a constituent unit derived from a compound obtained by adding a diol to an aromatic dicarboxylic acid having 2 to 4 functional groups. Specific examples of the aromatic dicarboxylic acid constituting the constituent unit derived from a compound obtained by adding a diol to an aromatic dicarboxylic acid include phthalic anhydride and terephthalic acid. Examples of the diol include diethylene glycol, 1,4-butanediol, 1,3-propanediol, and 3-methyl-1,5-pentanediol.

The polyol serving as a material of the first constituent unit may contain only one kind, or may contain two or more kinds, of a constituent unit selected from the group consisting of the constituent unit derived from the aromatic amine compound described above, the constituent unit derived from the aliphatic non-amine compound, and the constituent unit derived from a compound obtained by adding a diol to an aromatic dicarboxylic acid.

For example, the polyol serving as a material of the first constituent unit may contain the constituent unit derived from an aromatic amine compound and the constituent unit derived from a compound obtained by adding a diol to an aromatic dicarboxylic acid. Since the polyol serving as a material of the first constituent unit contains the constituent unit derived from an aromatic amine compound and the constituent unit derived from a compound obtained by adding a diol to an aromatic dicarboxylic acid, the aromatic rings of these constituent units are stacked together, so that the strength of the cell wall may be further improved. As a result, it is thought that the cells may be further miniaturized and a high gas barrier property may be imparted, so that the thermal conductivity of the rigid polyurethane foam may be further reduced.

In a case where the polyol serving as a material of the first constituent unit contains the constituent unit derived from an aromatic amine compound and the constituent unit derived from a compound obtained by adding a diol to an aromatic dicarboxylic acid, when the entire polyol serving as a material of the first constituent unit is regarded as 100 mass%, the constituent unit derived from an aromatic amine compound may be contained in a range of 65 mass% to 99 mass%, and the constituent unit derived from a compound obtained by adding a diol to an aromatic dicarboxylic acid may be contained in a range of 1 mass% to 10 mass%.

As the isocyanate serving as a material of the second constituent unit, those conventionally used for rigid polyurethane foams may be widely used, and in the present embodiment, polymeric MDI may be used.

The rigid polyurethane foam according to the present embodiment further contains fine particles.

The fine particles have a lower thermal conductivity than that of the polyurethane resin containing the first constituent unit and the second constituent unit.

The thermal conductivity of the polyurethane resin may be, for example, 210 mW/m·K or more.

The thermal conductivity of the fine particles may be, for example, 50 mW/m·K or less, 30 mW/m·K or less, or 20 mW/m·K or less.

The shape of the fine particles may be any of a spherical shape, a spheroidal shape, other geometric shapes, an irregular shape, and the like, and may be a spherical shape or a spheroidal shape. A shape factor, which is a quotient obtained by dividing, by 2, a total value of an aspect ratio (a value obtained by dividing the major axis length by the minor axis length) and an unevenness coefficient (a value obtained by dividing the cross-sectional area in a plane including the major axis and the minor axis by the square of the peripheral length thereof), may be 120 or less.

The fine particles may include, for example, an air layer (core), a spherical or polygonal shell, and a surface layer formed to cover a surface of the shell, and may be chemically bonded, through the surface layer, to the polyurethane resin contained in the rigid polyurethane foam. The chemical bond is not particularly limited, but may be a covalent bond.

The shell may include an inorganic material excellent in strength and heat resistance, and examples thereof include hollow particles, porous particles, aerogel, and xerogel made of an oxide such as silica or alumina.

The surface layer is formed, for example, by a modifying group fixed to the above-described shell through a chemical bond such as a covalent bond.

The modifying group may be appropriately used according to the required performance, and a modifying group containing only a hydrophilic group or a modifying group having both a hydrophobic group and a hydrophilic group may be suitably used.

The modifying group may be one containing one or more hydrophilic groups, or one having one or more hydrophobic groups and one or more hydrophilic groups. More preferably, the modifying group may be a linear one in which a linking group for chemically bonding the shell and the modifying group, a hydrophobic group, and a hydrophilic group are bonded in this order from the side closer to the shell. Furthermore, the structure may be one in which a hydrophobic group is additionally present after a linking group, a hydrophobic group, and a hydrophilic group are arranged in this order from the side closer to the shell, or one in which a pair of a hydrophobic group and a hydrophilic group is repeated.

The surface layer may include only one type of the above-described modifying group, or may contain two or more types of the above-described modifying groups.

The linking group may be any group capable of chemically bonding the shell and the modifying group, and for example, when the shell is silica, a silane compound such as 3-aminopropyltriethoxysilane may be used.

Examples of the hydrophobic group include a linear hydrocarbon group having 1 to 10 carbon atoms, such as an ethyl group, a methyl group, and a propyl group, or a cyclic hydrocarbon group such as a benzene ring. The hydrophobic group may include, for example, a linear alkyl group having 1 to 10 carbon atoms, an aryl group having 4 to 10 carbon atoms, or a combination thereof.

The hydrophilic group may be one having an amino group or a hydroxyl group.

One modifying group derived from one molecule of the surface treatment agent may contain one type or a plurality of types of the above-described hydrophobic groups, and may contain one type or a plurality of types of hydrophilic groups. Furthermore, when multiple types of hydrophobic groups and/or hydrophilic groups are included in a single modifying group, these groups may be arranged in any order and in any number, provided that a linking group is located first, followed by alternating hydrophobic and hydrophilic groups.

The above-described surface layer may be formed, for example, by surface-treating the shell using a surface treatment agent such as a silane coupling agent having the above-described hydrophobic group and/or hydrophilic group. More specifically, the surface layer may be formed by chemically bonding the surface of the shell and the surface treatment agent to each other by a covalent bond or the like, so that a large number of the modifying groups are arranged to cover the surface of the shell. When the surface treatment agent is linear, the modifying group derived from the surface treatment agent may be arranged so as to extend outward from the surface of the shell.

In the present embodiment, when the total amount of the rigid polyurethane foam is 100 mass%, the content of the fine particles may be, for example, 0.1 mass% to 1.5 mass%, 0.1 mass% to 1.4 mass%, or 0.2 mass% to 1.3 mass%.

In addition, when the volume of the entire rigid polyurethane foam is 100 vol%, the content of the fine particles may be, for example, 0.01 vol% to 0.5 vol%, 0.05 vol% to 0.4 vol%, or 0.1 vol% to 0.3 vol%.

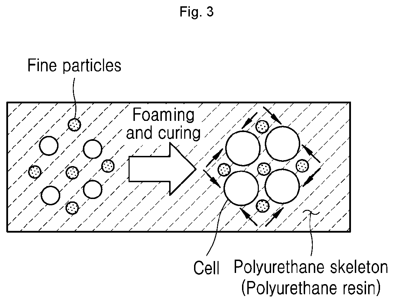

By defining the content of the fine particles as the volume ratio of the fine particles to the volume of the rigid polyurethane foam after foaming and curing as described above, even when the type of the fine particles is changed, the number of fine particles necessary for making the cells finer may be present in the fine-particle-containing rigid polyurethane foam, and as shown in FIG. 3, the growth of the cells may be reliably controlled to improve the thermal insulation effect.

By setting the content of the fine particles to 0.01 vol% or more, the cells may be reliably made finer. In addition, by setting the content of the fine particles to 0.5 vol% or less, it is possible to prevent the viscosity of the mixture serving as a material for the rigid polyurethane foam before foaming and curing from becoming excessively high, thereby suppressing an increase in thermal conductivity caused by large bubbles generated in the urethane foam failing to escape and becoming trapped as voids.

The apparent density of the fine particles may be 200 kg/m³ or less. When the apparent density of the fine particles is 200 kg/m³ or less, the viscosity of the mixture does not become too high, and the generation of the above-described voids may be further suppressed. When the apparent density of the fine particles becomes smaller, the thermal insulation performance of the polyurethane foam is improved, and therefore the smaller the apparent density of the fine particles, the better.

In addition, the apparent density may be obtained by converting the unit from the apparent density (g/ml) obtained by quietly placing 100 g of the fine particle powder into a graduated cylinder, leveling the upper surface, and reading the apparent volume (V₀) (unit: ml).

The average particle diameter of the fine particles may be, for example, 0.03 µm to 20 µm, 0.3 µm to 10 µm, or 0.5 µm to 5 µm. When the average particle diameter of the fine particles is 0.03 µm or more, the effect of suppressing the growth of cells due to the presence of the fine particles may be sufficiently exhibited. In addition, when the average particle diameter of the fine particles is 20 µm or less, the number of fine particles contained in the rigid polyurethane foam may be sufficiently secured, and the effect of suppressing the growth of cells may be sufficiently exhibited. The average particle diameter of the fine particles may be measured by observation with a scanning electron microscope.

The rigid polyurethane foam according to the present embodiment further contains a third constituent unit constituting the polyurethane resin together with the first constituent unit and the second constituent unit.

The third constituent unit is a constituent unit having a higher degree of freedom in stereostructure than the first constituent unit and the second constituent unit. Having a high degree of freedom in stereostructure means, for example, that the chemical structure of the third constituent unit is chain-type and is stretchable in the longitudinal direction of the chain-type structure and/or has little steric hindrance due to side chains.

Examples of compounds serving as materials for obtaining the third constituent unit having a high degree of freedom in expansion and contraction in the longitudinal direction of the chain-like structure as described above include compounds that have, in their molecules, a structure including a polyolefin main chain and are capable of forming a covalent bond, such as a urethane bond, with a material constituting the first constituent unit or the second constituent unit.

The compound serving as the material for the third constituent unit may have functional groups capable of forming covalent bonds such as urethane bonds at both ends of the above-described chain-like structure. Examples of the compound serving as the material for the third constituent unit include a polyol or a surfactant having a linear structure with relatively small side chains.

Specific examples of the polyol serving as the material for the third constituent unit include a polyether such as polyethylene glycol and polypropylene glycol.

Examples of the surfactant include a nonionic surfactant and a silicone-based surfactant.

The molecular weight of the third constituent unit derived from these compounds may be, for example, 50 Dalton to 500 Dalton, or 100 Dalton to 400 Dalton.

In addition, in the present specification, the linear chain type may refer to one having no side chain, or even if a side chain is present, one having a side chain within a range in which the length of the side chain relative to the main chain is sufficiently short and does not impair the degree of freedom in stereostructure of the main chain (for example, the degree of expansion and contraction).

Further, the first constituent unit, the second constituent unit, and the third constituent unit are each introduced into the polyurethane resin of the rigid polyurethane foam while maintaining the original chemical structure except for the portions of the functional groups at both ends used for forming the urethane bond in the chemical structure of the compound serving as the material thereof.

The content of the third constituent unit in the rigid polyurethane foam may be, for example, 0.5 mass% to 5 mass%, or 0.6 mass% to 4 mass%, based on 100 mass% of the total amount of the rigid polyurethane foam.

### <Method of producing rigid polyurethane foam according to the present embodiment>

The rigid polyurethane foam according to the present embodiment may be produced, for example, by the following procedure and steps.

First, a mixture containing the material for the first constituent unit and the material for the third constituent unit is prepared. Next, this mixture and the fine particles are mixed under an atmosphere open to the air at room temperature, and thereafter a premix is prepared by adding and mixing a foaming agent in a sealed space set to 20 °C to 25 °C.

From the viewpoint of improving workability in injecting the premix into a mold and foaming and curing the premix, the viscosity of the premix may be, for example, 500 mPa·s to 2000 mPa·s. The suitable viscosity of this premix is a value measured under conditions of 20 °C using TVC-10 manufactured by Toki Sangyo Co., Ltd.

A rigid polyurethane foam may be produced by adding the material for the second constituent unit to the premix and stirring, and thereafter injecting this mixed liquid into an appropriate mold and allowing it to freely foam.

Although various foaming agents conventionally used for rigid polyurethane foams may be used, it is particularly preferable to use an organic solvent having a relatively low boiling point, such as cyclopentane, as the foaming agent. Specifically, a foaming agent having a boiling point of 55 °C or less, or a foaming agent having a boiling point of 50 °C or less may be used.

The premix may further contain a foaming aid, and the content of the foaming aid in the premix is, for example, 0.5 mass% to 2.0 mass%. The foaming aid is not particularly limited, but from the viewpoint of achieving both high reaction efficiency and low cost, it is preferable to use water.

The premix may further contain additives such as a catalyst and a foam stabilizer (binder) in addition to the aforementioned components.

Examples of the catalyst include a resinification catalyst, a foaming catalyst, and a trimerization catalyst. When a catalyst containing a tertiary amine is used, a rigid polyurethane foam that is as environmentally friendly as possible may be obtained while suppressing production costs.

As the foam stabilizer, those conventionally used in rigid polyurethane foams may be widely used, and a silicone-based foam stabilizer may be used.

### <Effects of the present embodiment>

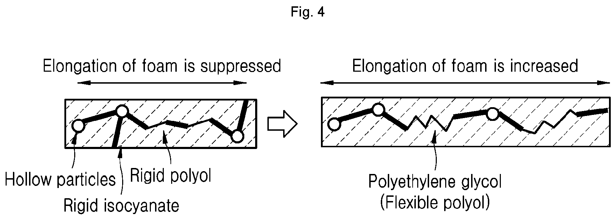

By incorporating fine particles into the rigid polyurethane foam, an attempt was made to reduce the overall thermal conductivity of the rigid polyurethane foam. However, the present inventors found that there are cases in which the thermal conductivity of the rigid urethane foam hardly decreases compared to the case where fine particles are not incorporated. In particular, when the fine particles are chemically bonded to the urethane resin, a decrease in thermal conductivity is expected because the fine particles are efficiently used to suppress cell growth; however, it was found that, even in such a case, the decrease in thermal conductivity was not as great as expected. In view of this, in the rigid polyurethane foam according to the present embodiment, the thermal conductivity of the urethane resin itself may be lowered by using, as the third constituent unit, one having a structure with little steric hindrance. In addition, as shown in FIG. 4, since the third constituent unit is bonded by a covalent bond with the first constituent unit or the second constituent unit having a rigid structure with relatively low degree of freedom to form a polyurethane resin, the overall degree of freedom in stereostructure of the polyurethane resin may be increased. As a result, even when the fine particles are contained, the foam expansion ratio during foaming of the rigid polyurethane foam may be increased as much as possible, and thus it is considered that the overall thermal conductivity of the rigid polyurethane foam may be kept sufficiently lower than conventional levels.

For example, in the case where the rigid polyurethane foam is used as an insulating material of a refrigerator, it is necessary to foam and cure the rigid polyurethane foam while injecting the rigid polyurethane foam into an elongated gap between the outer cabinet and the inner cabinet of the refrigerator. In this way, even in a case such as foaming and curing the rigid polyurethane foam while injecting the rigid polyurethane foam into an elongated space, when the rigid polyurethane foam contains the third constituent unit having a high degree of freedom in stereostructure as described above, the foam expansion ratio may be increased compared to before as described above, and therefore it is possible to easily fill the rigid polyurethane foam into the inside of the gap (improvement in filling property).

The rigid polyurethane foam according to the present embodiment may be used for various applications as an insulating material, and since the thermal conductivity is sufficiently low and the manufacturing cost can also be suppressed to an appropriate range, the rigid polyurethane foam may be suitably used, for example, as an insulating material for home appliances such as a refrigerator.

Hereinafter, the definitions of the substituents used in the chemical formulae will be described.

The term "alkyl" used in the chemical formulae refers to a completely saturated branched or unbranched (or straight-chain or linear) hydrocarbon.

Non-limiting examples of the "alkyl" include methyl, ethyl, n-propyl, isopropyl, n-butyl, isobutyl, sec-butyl, n-pentyl, isopentyl, neopentyl, n-hexyl, 3-methylhexyl, 2,2-dimethylpentyl, 2,3-dimethylpentyl, n-heptyl, and the like.

At least one hydrogen atom in the "alkyl" may be substituted with a halogen atom, a C1-C30 alkyl group substituted with a halogen atom (e.g., CCF₃, CHCF₂, CH₂F, CCl₃, and the like), a C1-C30 alkoxy, a C2-C30 alkoxyalkyl, a hydroxy group, a nitro group, a cyano group, an amino group, an amidino group, a hydrazine group, a hydrazone group, a carboxyl group or a salt thereof, a sulfonyl group, a sulfamoyl group, a sulfonic acid group or a salt thereof, phosphoric acid or a salt thereof, or a C1-C30 alkyl group, a C2-C30 alkenyl group, a C2-C30 alkynyl group, a C1-C30 heteroalkyl group, a C6-C30 aryl group, a C7-C30 arylalkyl group, a C2-C30 heteroaryl group, a C3-C30 heteroarylalkyl group, a C2-C30 heteroaryloxy group, a C3-C30 heteroaryloxyalkyl group, or a C6-C30 heteroarylalkyloxy group.

The term "alkylene" used in the chemical formulae refers to a diradical form of the "alkyl," and the alkyl is as described above. A diradical is, for example, an alkyl group requiring two points of attachment. The alkylene group includes diradicals, for example, - CH₂-, -CH₂CH₂-, -CH₂CH(CH₃)CH₂-, and the like.

Non-limiting examples of the "alkylene" include methylene, ethylene, n-propylene, isopropylene, n-butylene, isobutylene, sec-butylene, n-pentylene, isopentylene, neopentylene, n-hexylene, 3-methylhexylene, 2,2-dimethylpentylene, 2,3-dimethylpentylene, n-heptylene, and the like.

The term "aryl," as used alone or in combination in the chemical formulae, refers to an aromatic hydrocarbon containing one or more rings. The number of carbon atoms in the aryl group is, for example, 4 to 20, 4 to 15, or 4 to 10.

The term "aryl" also includes a group in which an aromatic ring is fused to one or more cycloalkyl rings.

Non-limiting examples of the "aryl" include phenyl, naphthyl, tetrahydronaphthyl, and the like.

In addition, one or more hydrogen atoms in the "aryl" group may be substituted with the same substituents as in the case of the alkyl group described above.

### Mode for Carrying out the Invention

The present disclosure is not limited to the embodiments described above, and various modifications or combinations of embodiments may be made as long as they do not depart from the spirit of the present disclosure.

### Examples

Hereinafter, the present disclosure will be described in more detail based on specific examples. However, the following examples are merely examples of the present disclosure, and the present disclosure is not limited to the following examples.

First, mixed liquids having the compositions listed in Table 1 below were each prepared. The mixture, adjusted to a liquid temperature of 25 °C, was stirred with a hand mixer at 5000 rpm for 4 seconds. The viscosity of each mixed liquid after stirring was approximately 700 mPa·s. This mixed liquid was poured into a wooden box of 300 mm × 300 mm × 50 mm whose temperature was controlled to 42 °C to 44 °C, and allowed to foam freely, thereby producing the rigid polyurethane foams of the Examples and Comparative Examples. Almost all of the materials of the first constituent unit, the second constituent unit, and the third constituent unit that were used are used to form the rigid polyurethane foam. Table 2 shows the volume ratio of each component when the volume of each rigid polyurethane foam after foaming and curing is regarded as 100 mass%.

**[Table 1]**

| | Example 1 | Example 2 | Example 3 | Example 4 | Example 5 | Example 6 | Example 7 | Example 8 | Example 9 | Example 10 | Example 11 | Example 12 | COMP. Example 1 | COMP. Example 2 |
|---|---|---|---|---|---|---|---|---|---|---|---|---|---|---|
| Polyol premix | 39.68 | 39.58 | 39.48 | 39.38 | 39.28 | 40.08 | 40.08 | 39.58 | 38.78 | 38.88 | 38.48 | 38.54 | 40.27 | 40.08 |
| Foaming agent | 5.92 | 5.91 | 5.89 | 5.88 | 5.86 | 5.98 | 5.98 | 5.98 | 5.79 | 5.80 | 5.74 | 5.75 | 6.01 | 5.98 |
| Isocyanate | 52.94 | 52.81 | 52.67 | 52.54 | 52.40 | 53.48 | 53.48 | 53.48 | 51.74 | 51.88 | 51.34 | 51.42 | 53.73 | 53.48 |
| Hollow particles | 0.47 | 0.47 | 0.47 | 0.47 | 0.47 | 0.47 | 0.47 | 0.47 | 0.71 | 0.94 | 0.94 | 1.18 | 0 | 0.47 |
| Particle surface modification | None | None | None | None | None | None | None | None | None | None | None | None | - | None |
| PEG200 | 1 | 1.25 | 1.5 | 1.75 | 2 | | | | 3 | 2.5 | 3.5 | 3.125 | 0 | 0 |
| PEG600 | | | | | | | | 1.25 | | | | | | |
| Silicone-based surfactant | | | | | | 1.25 | | | | | | | | |
| Nonionic surfactant | | | | | | | 1.25 | | | | | | | |

The numerical values in Table 1 are all expressed in mass%. Furthermore, the specific details of each component in Table 1 are as follows.
Polyol premix: 100 parts by mass of polyol (70 mass% of aromatic amine-based polyol + 30 mass% of sorbitol-based polyol) + 3.0 parts by mass of tertiary amine catalyst + 2.5 parts by mass of silicone-based foam stabilizer + 1.8 parts by mass of water. The polyol contained in the polyol premix is the material of the first constituent unit.
Foaming agent: MARUKAZOL FH (manufactured by Maruzen Petrochemical Co., Ltd.)
Isocyanate (material of the second constituent unit): MR-200, Index110 (manufactured by Tosoh Corporation)
Hollow particles: hollow silica (average particle diameter (D50): 2 µm)
PEG200 or PEG600 (material of the third constituent unit)
Silicone-based surfactant or nonionic surfactant (dispersant)

**[Table 2]**

| | Example 1 | Example 2 | Example 3 | Example 4 | Example 5 | Example 6 | Example 7 | Example 8 | Example 9 | Example 10 | Example 11 | Example 12 | COMP. Example 1 | COMP. Example 2 |
|---|---|---|---|---|---|---|---|---|---|---|---|---|---|---|
| Rigid polyurethane foam | 99.80 | 99.8 | 99.8 | 99.8 | 99.8 | 99.8 | 99.8 | 99.8 | 99.7 | 99.6 | 99.6 | 99.5 | 100 | 99.8 |
| Hollow particles | 0.2 | 0.2 | 0.2 | 0.2 | 0.2 | 0.2 | 0.2 | 0.2 | 0.3 | 0.4 | 0.4 | 0.5 | 0 | 0.2 |
| Viscosity decreasing agent | PEG200 | PEG200 | PEG200 | PEG200 | PEG200 | Silicone -based | Nonionic | PEG600 | PEG200 | PEG200 | PEG200 | PEG200 | - | - |
| Particle surface modification | None | None | None | None | None | None | None | None | None | None | None | None | - | None |

The numerical values in Table 2 for which no unit is indicated are expressed in vol%.

Furthermore, the volume of each rigid polyurethane foam in Table 2 was calculated from its density and the total mass of the polyol, foaming agent, and isocyanate shown in Table 1. The volume of the other components was calculated from the density and mass of each component.

In addition, the density of each rigid polyurethane foam was measured by the following method.

### <Measurement of density of the entire fine-particle-containing rigid polyurethane foam>

The weight of the rigid polyurethane foam having a size of 300 mm × 300 mm × 50 mm in thickness was measured with an electronic balance, and the density of the entire foam was calculated from the volume of the entire rigid polyurethane foam.

Next, the performance of these Examples and Comparative Examples was evaluated by the method shown below.

### <Measurement of thermal conductivity>

For the rigid polyurethane foam of each Example and Comparative Example after foaming and curing, which was produced in a size of 300 mm × 300 mm × 50 mm in thickness, the thermal conductivity at an average temperature of 20 °C was measured using a NETZSCH steady-state thermal conductivity measuring device (HFM436). The results are shown in Table 3.

**[Table 3]**

| | Example 1 | Example 2 | Example 3 | Example 4 | Example 5 | Example 6 | Example 7 | Example 8 | Example 9 | Example 10 | Example 11 | Example 12 | COMP. Example | COMP. Example 2 |
|---|---|---|---|---|---|---|---|---|---|---|---|---|---|---|
| Thermal conductivity @20°C | 19.46 | 19.37 | 19.4 | 19.48 | 19.55 | 19.42 | 19.44 | 19.57 | 19.55 | 19.38 | 19.48 | 19.33 | 20.16 | 19.6 |
| Thermal conductivity O or x | O | O | O | O | O | O | O | O | O | O | O | O | x | Δ |

From the results in Table 3, it can be seen that the rigid polyurethane foams of Examples 1 to 12 containing the third constituent unit can achieve a lower thermal conductivity not only compared to Comparative Example 1 containing no fine particles but also compared to Comparative Example 2 containing fine particles.

Next, assuming a case where the rigid polyurethane foam is used by filling it into a gap, as in the case of using the rigid polyurethane foam as the insulating material for the aforementioned refrigerator, the filling property was evaluated by the following method.

### <Flow length (filling property)>

For Examples 1 to 7, Comparative Example 1, and Comparative Example 2 among the Examples and Comparative Examples listed in Table 1, a fixed amount of the mixed liquid was allowed to foam freely in an aluminum mold having a height of 1000 mm × a width of 175 mm × a depth of 25 mm whose temperature was controlled to 42 °C to 44 °C, and the height of each rigid polyurethane foam after foaming and curing was measured. The height of the rigid polyurethane foam containing no fine particles of Comparative Example 1 measured by this method was regarded as 100%, and the heights of the rigid polyurethane foams relating to the other Examples and Comparative Examples were evaluated. The results are shown in Table 4.

**[Table 4]**

| | Example 1 | Example 2 | Example 3 | Example 4 | Example 5 | Example 6 | Example 7 | COMP. Example 1 | COMP. Example 2 |
|---|---|---|---|---|---|---|---|---|---|
| Flow length ratio [%] | -4.20% | -2.40% | -1.50% | -0.30% | 0.00% | -1.50% | -0.60% | 0.00% | -6.90% |
| 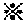 Length ratio relative to COMP. Example 1 | | | | | | | | | |
| Flowability O or x | O | O | O | O | O | O | O | O | x |
| 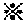 -6 % or more is rated as O | | | | | | | | | |

From the results in Table 4, in Comparative Example 2 in which only fine particles were contained in the rigid polyurethane foam, the height of the rigid polyurethane foam after foaming and curing was smaller compared to Comparative Example 1 containing no fine particles, and from this it can be seen that in Comparative Example 2, the foam expansion ratio of the rigid polyurethane foam due to containing the fine particles was reduced.

On the other hand, in Examples 1 to 7 containing the third constituent unit together with the fine particles, the decrease in the height of the rigid polyurethane foam was suppressed to a level much smaller than that in Comparative Example 2, and it was confirmed that Examples 1 to 7 could maintain a foam expansion ratio equivalent to that of Comparative Example 1 containing no fine particles and exhibit sufficient filling properties.

### Industrial Applicability

Since the rigid polyurethane foam used in a refrigerator contains fine particles having a lower thermal conductivity than the urethane resin, and a third constituent unit having a higher degree of freedom in stereostructure than the first constituent unit and the second constituent unit constituting the urethane resin, it is possible to provide a refrigerator in which the thermal conductivity of the rigid polyurethane foam is further reduced than before.

## Claims

1. A refrigerator comprising:
a main body including
an inner cabinet forming a storage compartment;
an outer cabinet outside the inner cabinet; and
an insulating material between the inner cabinet and the outer cabinet;
and
a door configured to open and close the storage compartment,
wherein
the insulating material includes a rigid polyurethane foam,
the rigid polyurethane foam contains a first constituent unit derived from a polyol and a second constituent unit derived from an isocyanate, and
the rigid polyurethane foam contains fine particles having a thermal conductivity lower than that of a polyurethane resin including the first constituent unit and the second constituent unit, and a third constituent unit having a higher degree of freedom in stereostructure than the first constituent unit and the second constituent unit.

2. The refrigerator of claim 1, wherein the third constituent unit is a constituent unit derived from a polyol, a constituent unit derived from a surfactant, or a combination thereof.

3. The refrigerator of claim 2, wherein the constituent unit derived from a polyol includes a constituent unit derived from polyethylene glycol, a constituent unit derived from polypropylene glycol, or a combination thereof.

4. The refrigerator of claim 1, wherein the third constituent unit includes a linear structure.

5. The refrigerator of claim 1, wherein a molecular weight of the third constituent unit is 50 Dalton to 500 Dalton.

6. The refrigerator of claim 1, wherein a content of the third constituent unit is 0.5 mass% to 5 mass% with respect to 100 mass% of the rigid polyurethane foam.

7. The refrigerator of claim 1, wherein the fine particles are chemically bonded to the polyurethane resin, and
the chemical bond includes a urea group, a urethane group, or a combination thereof.

8. The refrigerator of claim 1, wherein a content of the fine particles is 0.01 vol% to 0.5 vol% with respect to 100 vol% of the rigid polyurethane foam.

9. The refrigerator of claim 1, wherein a content of the fine particles is 0.1 mass% to 1.5 mass% with respect to 100 mass% of the rigid polyurethane foam.

10. The refrigerator of claim 1, wherein surfaces of the fine particles are modified by a compound containing a hydrophilic group and a hydrophobic group, and
the hydrophilic group is an amino group or a hydroxyl group, and the hydrophobic group is a linear alkyl group having 1 to 10 carbon atoms.

11. The refrigerator of claim 1, wherein the fine particles are hollow particles or porous particles.

12. The refrigerator of claim 1, wherein an average particle diameter of the fine particles is 0.03 µm to 20 µm.

13. The refrigerator of claim 1, wherein an apparent density of the fine particles is 200 kg/m³ or less.

14. The refrigerator of claim 1, wherein the first constituent unit contains, in a range of 1 mass% to 10 mass%,
a constituent unit derived from a compound obtained by adding ethylene oxide to an aliphatic non-amine compound having 2 to 4 functional groups, and
contains, in a range of 65 mass% to 99 mass%,
a constituent unit derived from a compound obtained by adding both ethylene oxide and propylene oxide to an aromatic amine compound having 4 to 6 functional groups.

15. The refrigerator of claim 1, wherein the first constituent unit contains, in a range of 1 mass% to 10 mass%, a constituent unit derived from a compound obtained by adding a diol to an aromatic dicarboxylic acid having 2 to 4 functional groups.
